# EUROPÄISCHE PATENTSCHRIFT

(11) **EP 3 015 228 B1**
(45) Veröffentlichungstag und Bekanntmachung des Hinweises auf die Patenterteilung: **08.02.2017**
(21) Anmeldenummer: 15191277.1
(22) Anmeldetag: 23.10.2015
(51) Int. Cl.: B25J 21/00, B25J 9/00, B24C 3/22, B24C 3/32, B24C 3/18

(54) **VORRICHTUNG ZUM STRAHLEN VON EISENBAHN-RADSÄTZEN MIT EINER HERMETISCH ABGESCHLOSSENEN KAMMER**
DEVICE FOR BLASTING RAILWAY WHEELSETS WITH A HERMETICALLY SEALED CHAMBER
PROCEDE DE GRENAILLAGE D'ESSIEUX FERROVIAIRES AYANT UNE CHAMBRE FERMEE HERMETIQUEMENT

(30) Priorität: 31.10.2014 DE 102014015962
(43) Veröffentlichungstag der Anmeldung: 04.05.2016
(73) Patentinhaber: Guder Strahltechnik GmbH, 24536 Neumünster (DE)
(72) Erfinder: Guder, Armin, 24536 Neumünster (DE); Guder, Siegfried, 24536 Neumünster (DE)
(74) Vertreter: Lobemeier, Martin Landolf

(56) Entgegenhaltungen:
- DE-A1- 2 522 620
- DE-A1- 3 523 647
- DE-B3-102010 021 716
- US-A1- 2010 154 606

## Beschreibung

Die Erfindung betrifft eine Vorrichtung zum Strahlen der Radsätze von Schienenfahrzeugen mit wenigstens einer hermetisch abgeschlossenen Kammer mit wenigstens einem in der Kammer verschwenkbaren mehrachsigen Gelenkarmroboter, dessen Effektor als Hochdruck-Strahldüse ausgebildet ist.

Die Radsätze von Schienenfahrzeugen unterliegen im Betrieb hohen Beanspruchungen. Aus diesem Grund müssen die Radsatzwelle und die Radscheibe regelmäßig nachgemessen und auf feinste Risse hin abgesucht werden. Dies setzt eine Beseitigung von sich ablagernden Verschmutzungen und Schmutzbelägen voraus. Dies erfolgt durch einen regelmäßigen Ausbau, Strahlen und Neulackieren der Radsätze.

Aus der DE 25 22 620 A1 ist eine Strahlvorrichtung Oberflächenbehandlung von Werkstücken durch Strahlen bekannt, bei der eine Strahlkammer mit zwei an der Decke angeordneten, ortsfesten Strahlvorrichtungen Verwendung findet, und die Strahlkammer über Schienen durch die Strahlkammer fahrende Werkstückhalter aufweist, bei denen auf dem Werkstückhalter eine Drehvorrichtung zur Drehung des Werkstücks angeordnet ist.

Aus der DE 35 23 647 A1 ist eine Strahlvorrichtung mit an der Decke angeordnetem, fernbedienbarem Roboterarm und über Schienen durch den Bearbeitungsraum verfahrbarem Werkstücktransport bekannt.

Die US 3 598 017 A offenbart eine Dreh- und Anhebevorrichtung zur Bearbeitung von Radsätzen.

Schließlich ist es aus der DE 43 16 697 A1 bekannt, Radsätze mittels Fräser, aber auch mittels Schleifwerkzeugen oder Strahlverfahren zu bearbeiten.

Die vorbekannten Vorrichtungen sind zum Strahlen der Radsätze von Schienenfahrzeugen nicht geeignet.

Der Erfindung liegt damit die Aufgabe zugrunde, eine Vorrichtung zu schaffen, die zum Strahlen der Radsätze von Schienenfahrzeugen geeignet ist.

Erfindungsgemäß wird diese Aufgabe durch die Vorrichtung mit den Merkmalen gemäß Anspruch 1 gelöst. Der einzige Unteranspruch gibt eine bevorzugte Ausgestaltung an.

Die Erfindung wird im Folgenden anhand von Zeichnungen erläutert. Dabei zeigen:

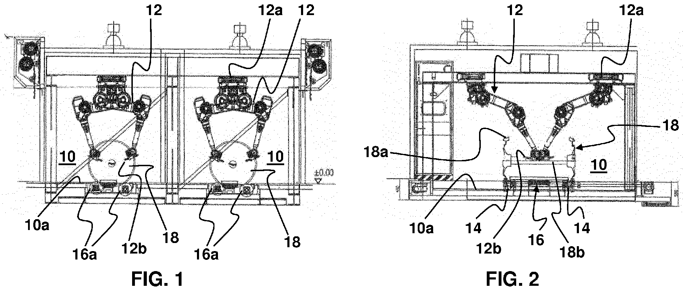

- Fig. 1: eine Ansicht in Längsrichtung auf die Vorrichtung mit zwei nebeneinander stehenden Kammern bei entfernten Stirnwänden der Kammern, und
- Fig. 2: eine Ansicht in Längsrichtung auf eine Kammer bei entfernten Seitenwänden.

Die gezeigte Vorrichtung zum Strahlen von Radsätzen von Schienenfahrzeugen besteht aus wenigstens einer hermetisch abgeschlossenen Kammer 10 und zwei in der Kammer 10 arbeitenden Gelenkarmrobotern 12. Dabei ist der Fuß 12a der Gelenkarmroboter 12 außerhalb des Arbeitsbereiches des als Hochdruck-Strahldüse 12b ausgebildeten Effektors angeordnet.

Auf dem Boden 10a der Kammer 10 sind zwei Schienen 14 angeordnet, die gemeinsam ein Gleisstück bilden, wobei der Abstand der Schienen 14 voneinander also dem Abstand der Räder 18a eines zu strahlenden Radsatzes 18 entspricht.

In der Kammer 10 ist weiter eine Hebe- und Dreheinrichtung 16 angeordnet, die zwei jeweils unmittelbar neben den Schienen 14 angeordnete Paare von Antriebsrädern 16a aufweist. Die Antriebsräder 16a wirken jeweils auf eine der Laufflächen der Räder 18a des zu strahlenden Radsatzes 18.

Die Hebe- und Dreheinrichtung 16 ist weiter mit - nicht dargestellten - Mitteln zum Anheben der Paare von Antriebsrädern 16a mitsamt dem von diesem getragenen Radsatzes 18 versehen. Bei von den Antriebsrädern 16a angehobenem Radsatz 18 und Betätigen von - nicht dargestellten - Mitteln zum Antreiben der Antriebsräder 16a wird der Radsatz 18 um seinen Achsschaft 18b gedreht.

In jeder der Kammern 10 arbeitet ein Roboter 12, dessen ortsfester Fuß 12a außerhalb des Arbeitsbereiches des Effektors der Roboter 12 auf einer quer zu den Schienen 14 verlaufenden gedachten Achse der Kammer 10 angeordnet ist.

Zum Strahlen eines Radsatzes 18 wird dieser auf den Schienen 14, die an ein Gleis in einer Halle, in der die Vorrichtung aufgestellt ist, angrenzen, derart gerollt, dass dieser im Wesentlichen mittig zwischen den Antriebsrädern 16a der Hebe- und Dreheinrichtung 16 ruht. Sodann werden die Antriebsräder 16a der Einrichtung 16 angehoben, so dass die Räder 18a des Radsatzes 18 von den Schienen 14 frei kommen. Die auf die Lauffläche der Räder 18a wirkenden Antriebsräder16a werden angetrieben, sie drehen die Räder des Radsatzes 18a um den Achsschaft 18b des Radsatzes 18.

Bei einem Betrieb strahlt der eine der beiden Roboter 12 die eine Hälfte des Radsatzes 18 und der andere der beiden Roboter 12 die andere Hälfte des Radsatzes 18.

Nicht dargestellt ist eine bevorzugte Ausführungsform, bei der die Hebe- und Dreheinrichtung mit Mitteln zu deren Verschwenken um die eigene vertikale Mittelachse um wenigstens 90° versehen ist.

Die vorgeschlagene Vorrichtung erlaubt das Strahlen von Radsätzen mit einer hohen Durchsatzrate: Der Weg, den die Roboter abzufahren haben, ist aufgrund der Drehbarkeit der zu strahlenden Radsätze 18 im Wesentlichen auf ein Verschwenken des als Hochdruck-Strahldüse 12b ausgebildeten Effektors beschränkt.

## Patentansprüche

1. Vorrichtung zum Strahlen der Radsätze von Schienenfahrzeugen, mit wenigstens einer hermetisch abgeschlossenen Kammer (10) und wenigstens einem in der Kammer (10) verschwenkbaren mehrachsigen Gelenkarmroboter (12), dessen Effektor eine Hochdruck-Strahldüse (12b) ist,
**gekennzeichnet durch**
- zwei auf dem Boden (10a) der Kammer (10) angeordnete, ein Gleisstück bildende Schienen (14),
- eine auf dem Boden (10a) der Kammer (10) angeordnete Hebe- und Dreheinrichtung (16), die
o mit zwei Paaren von unmittelbar neben den Schienen (14) angeordneten, auf jeweils eine der Lauffläche der Räder (18a) des zu strahlenden Radsatzes (18) wirkenden Antriebsrädern (16a) und
o mit Mitteln zum Anheben der Paare von Antriebsrädern (16a) mitsamt dem von diesen getragenen Radsatzes (18) und zum Antreiben des Radsatzes (18) zur Drehung um deren Achsschaft (18b)
versehen ist, und
- zwei Roboter (12), deren jeweiliger ortsfester Fuß (12a) außerhalb des Arbeitsbereiches des Effektors der Roboterarme (12b) auf einer quer zu den Schienen (14) verlaufenden gedachten Achse der Kammer (10) zueinander beabstandet angeordnet ist.

2. Vorrichtung nach Anspruch 1, **dadurch gekennzeichnet, dass** die Hebe-und Dreheinrichtung (16) mit Mitteln zu deren Verschwenken um die eigene vertikale Mittelachse um wenigstens 90° versehen ist.

## Claims

1. A device for blasting wheel sets of rail vehicles comprising at least one hermetically closed chamber (10) and at least one multi-axle articulated arm robot (12) tiltable in the chamber (10) and having an effector which is a high-pressure jet nozzle (12 b), **characterized by**
- two rails (14) arranged on the bottom (10a) of the chamber (10) and forming a track piece,
- lift and turn means (16) arranged on the bottom (10) of the chamber (10) and provided with
o two pairs of drive wheels (16a) arranged directly beside the rails (14) and acting onto one of the running surfaces of the wheels (18a) of the wheel set (18) to be blasted, respectively, and
o means for lifting the pairs of drive wheels (16a) together with the wheel set (18) supported by the same and for driving the wheel set (18) for the rotation about its axle shaft (18b),
and
- two robots (12) the stationary feet (12a) of which being arranged in a spaced condition with respect to one another outside of the operation range of the effector of the robot arms (12b) on a fictitious axis of the chamber (10) extending transversely with respect to the rails (14).

2. A device according to claim 1, **characterized in that** the lift and turn means (16) are provided with means for their tilting around the own vertical center axis for at least 90°.

## Revendications

1. Dispositif permettant de rayonner les essieux de véhicules ferroviaires, équipé d'au moins une chambre fermée hermétiquement (10) et d'au moins un robot (12) à bras articulé, pivotant et à plusieurs axes, installé dans la chambre (10),
dont l'effecteur est une buse d'éjection à haute pression (12b),
**caractérisé par**
- deux rails (14) formant une voie et placés sur le sol (10a) de la chambre (10),
- un dispositif pivotant et de levage (16) et placé sur le sol (10a) de la chambre (10), équipée de
o deux paires de roues motrices (16a) installées directement à côté des rails (14) et agissant chacune sur la surface de roulement des roues (18a) des essieux à rayonner (18) et de
o dispositifs permettant de soulever les couples de roues motrices (16a) ainsi l'essieu (18) supporté par ces dernières et permettant d'entraîner l'essieu (18) pour pivoter autour de sa tige d'axe (18b),
et
- deux robots (12) dont le pied fixe respectif (12a) est placé hors de la zone d'action de l'effecteur des bras du robot (12b), sur un axe de la chambre (10) transversal par rapport aux rails (14), l'un face à l'autre.

2. Dispositif selon la revendication n°1, **caractérisé en ce que** le dispositif pivotant et de levage (16) est doté d'un mécanisme permettant son pivotement autour de son axe vertical médian d'au moins 90°.
